# EUROPÄISCHE PATENTSCHRIFT

(11) **EP 1 811 245 B1**
(45) Veröffentlichungstag und Bekanntmachung des Hinweises auf die Patenterteilung: **22.05.2013**
(21) Anmeldenummer: 07100563.1
(22) Anmeldetag: 15.01.2007
(51) Int. Cl.: F24J 2/20

(54) **Modularer Sonnenkollektor**
Modular solar panel
Collecteur solaire modulaire

(30) Priorität: 20.01.2006 DE 102006003096
(43) Veröffentlichungstag der Anmeldung: 25.07.2007
(73) Patentinhaber: Hydro Aluminium Deutschland GmbH, 41515 Grevenbroich (DE)
(72) Erfinder: Schenkel, Willi, 41515 Grevenbroich (DE); Denkmann, Volker, 47906 Kempen (DE); Oetting, Wolf, 50823 Köln (DE); Bales, Jakob, 41515 Grevenbroich (DE)
(74) Vertreter: Cohausz & Florack

(56) Entgegenhaltungen:
- WO-A1-2004/074749
- DE-B3- 10 355 785
- FR-A1- 2 308 892
- GB-A- 1 551 817
- US-A- 4 105 822
- US-A- 4 211 207
- US-A- 4 347 093
- US-A- 4 527 547

## Beschreibung

Die Erfindung betrifft einen Sonnenkollektor zur Erwärmung eines Wärmeleitmediums umfassend mindestens ein Absorberelement (1) mit mindestens einem Absorberblech zur Absorption des Sonnenlichtes und Kanälen für das Wärmeleitmedium, welche mit dem Absorberblech derart verbunden sind, so dass Wärme von dem Absorberblech an das Wärmeleitmedium übertragen werden kann, wobei das Absorberblech eine selektiv absorbierende Beschichtung aufweist, wobei ein unterhalb des Absorberbleches angeordnetes Blech vorgesehen ist, welches mit dem Absorberblech abdichtend verbunden ist, wobei das Absorberblech und/oder das untere Blech zumindest teilweise aus Aluminium und/oder einer Aluminiumlegierung bestehen, das untere Blech und/oder das Absorberblech Prägungen aufweist, welche nach dem Verbinden des Bleches mit dem Absorberblech zumindest teilweise Kanäle für das Wärmeleitmedium bilden, und wobei die selektiv absorbierende Beschichtung des Absorberblechs hochtemperaturfest ist. Ferner betrifft die Erfindung ein Verfahren zur Herstellung eines entsprechenden Sonnenkollektors, wobei das Absorberelement mindestens ein Absorberblech zur Absorption des Sonnenlichtes aufweist und das Absorberblech und/oder das untere Blech zumindest teilweise aus Aluminium und/oder einer Aluminiumlegierung bestehen.

Sonnenkollektoren zur Erwärmung eines Wärmeleitmediums bzw. zur Warmwassererzeugung werden heutzutage in verschiedenen Formen als Flachkollektoren oder Röhrenkollektoren angefertigt. Röhrenkollektoren enthalten in einem Hüllrohr ein beschichtetes Absorberblech, dass sich durch die Sonnenstrahlung erwärmt und Kupferrohre mit einem Wärmeleitmedium erhitzt. Das Absorberblech ist üblicherweise aus Kupfer oder Aluminium und mit einer selektiv absorbierenden Beschichtung versehen, so dass möglichst viel Sonnenlicht absorbiert und möglichst wenig davon als Wärmestrahlung wieder abgestrahlt wird. Die Isolierung der Kupferrohre erfolgt durch das evakuierte Hüllrohr. Daneben werden häufig so genannte Flachkollektoren verwendet, welche im Gegensatz zu einem evakuierten Hüllrohr die Isolierung der mit dem Absorberblech in Kontakt stehenden Kupferrohre über konventionelles Isoliermaterial, beispielsweise Mineralwolle, realisieren. Beiden Kollektorarten ist gemein, dass diese ein Absorberelement mit einem Absorberblech aufweisen, mit welchem Kupferrohre zum Transport des Wärmeleitmediums durch Löten, Kleben oder Verschweißen verbunden sind. Einerseits ist das Verbinden der Kupferrohre mit dem Absorberblech aufwändig und insofern kostenintensiv, da dieses einzeln durch gängige Fügeverfahren (Schweißen, Löten, Kleben) durchgeführt wird. Andererseits stellt ein Rohrquerschnitt in Bezug auf die Effizienz der Wärmeübertragung vom Absorberblech auf das Wärmeleitmedium keine optimale Geometrie dar, da das Oberflächenvolumenverhältnis in Bezug auf die Kontaktfläche zum Absorberblech nicht optimal ist.

Ein Sonnenkollektor und ein Verfahren zur Herstellung eines Sonnenkollektors sind aus der US-Patentschrift US 4,211,207 bekannt, wobei der Sonnenkollektor ein mit dem unteren Blech gelötetes Absorberblech aufweist. Nicht gelötete Sonnenkollektoren sind aus der DE 103 55 785 B3, der US 4,527,547, der US 4,347,093, der US 4,105,822 und der GB 1 551 817 A bekannt.

Hiervon ausgehend liegt der vorliegenden Erfindung die Aufgabe zugrunde, einen Sonnenkollektor sowie ein Verfahren zur Herstellung eines Sonnenkollektors zur Verfügung zu stellen, welcher bzw. mit welchem die Kosten für die Herstellung von Sonnenkollektoren deutlich gesenkt und verbesserte Sonnenkollektoren zur Verfügung gestellt werden können.

Die oben gestellte Aufgabe wird mit einem Sonnenkollektor gemäß Patentanspruch 1 sowie mit einem Verfahren zur Herstellung eines Sonnenkollektors gemäß Patentanspruch 8 gelöst.

Bei einem erfindungsgemäßen Sonnenkollektor ist ein unterhalb des Absorberbleches angeordnetes Blech vorgesehen, welches mit dem Absorberblech abdichtend verbunden ist, wobei das untere Blech und/oder das Absorberblech Prägungen aufweist, welche nach dem Verbinden des Bleches mit dem Absorberblech zumindest teilweise Kanäle für das Wärmeleitmedium bilden und die selektiv absorbierende Beschichtung des Absorberblechs hochtemperaturfest ist.

Erfindungsgemäß werden die Kanäle für das Wärmeleitmedium durch das Absorberblech selbst und das unterhalb des Absorberbleches angeordnete Blech gebildet. Dadurch wird einerseits in Bezug auf die geometrische Form der Kanäle für das Wärmeleitmedium ein maximaler Freiheitsgrad erzielt. Andererseits können durch ein Verbinden des Bleches mit dem Absorberblech gleichzeitig alle Kanäle für das Wärmeleitmedium eines Absorberelementes hergestellt werden, so dass beispielsweise eine aufwändige Montage der Rohre entfällt. Ein aufwändiges Verlöten und Befestigen der einzelnen Kupferrohre an dem Absorberblech wird also dadurch vermieden und insofern die Kosten deutlich gesenkt. Durch eine geeignete Wahl der Prägungen des unteren Bleches und/oder des Absorberbleches kann die Querschnittsform der Kanäle und deren Verlauf im Absorberelement für das Wärmeleitmedium in Bezug auf einen verbesserten Wärmetransport optimiert werden, so dass verbesserte Sonnenkollektoren zur Verfügung gestellt werden können. Die Beschichtung des Absorberbleches kann noch vor dem Lötprozess aufgebracht werden, da diese hochtemperaturfest ist. Dies ermöglicht eine besonders wirtschaftliche Herstellung des Sonnenkollektors, da einerseits die Beschichtung des Absorberblechs bandweise erfolgen kann. Andererseits können die Sonnenkollektoren vor dem Lötprozess komplett fertig montiert werden, so dass nach dem Löten fertige Sonnekollektormodule zur Verfügung stehen, welche nicht mehr beschichtet werden müssen.

Eine besonders wirtschaftliche Herstellung des Sonnenkollektors wird dadurch erreicht werden, dass das Absorberblech und/oder das untere Blech zumindest teilweise aus Aluminium oder einer Aluminiumlegierung bestehen. Aluminium bzw. eine Aluminiumlegierung zeichnet sich nicht nur durch eine hervorragende Verarbeitungsfähigkeit aus, sondern weist darüber hinaus noch sehr gute Wärmeleiteigenschaften auf. Im Vergleich zum üblicherweise eingesetzten Kupfer ermöglicht ein wesentlich günstigerer Materialpreis eine kostengünstige Konstruktion ohne dass die Effizienz verringert wird. Zur Anwendung kommen dabei Aluminiumlegierung, beispielsweise vom Typ 3xxx, welche zur Herstellung von Wärmetauschern, beispielsweise für Kraftfahrzeuge, verwendet werden. Darüber hinaus ist aber auch der Einsatz anderer Aluminiumlegierungen denkbar.

Ein besonders einfaches Herstellverfahren ergibt sich dann, wenn das Absorberblech und/oder das untere Blech zumindest auf der mit dem Wärmeleitmedium in Kontakt stehenden Fläche eine Lotplattierung aufweisen. Eine Lotplattierung gewährleistet einerseits einen besonders rationellen und wirtschaftlichen Herstellungsprozess, in dem Durchlauföfen oder Batch-Öfen zum Verlöten des Absorberbleches mit dem unteren Blech verwendet werden können. Eine optionale Korrosionsschutzplattierung kann allgemein die Beständigkeit des Aluminiums bzw. der Aluminiumlegierung gegenüber dem Wärmeleitmedium verbessern.

In Bezug auf den Wärmeübertrag vom Absorberblech auf das Wärmeleitmedium dadurch verbessert, dass das Absorberblech mit dem unteren Blech stoffschlüssig verbunden, insbesondere verlötet, ist. Eine stoffschlüssige Verbindung gewährleistet eine besonders gute Wärmeübertragung, insbesondere dann, wenn Verbindungstechniken überwendet werden, welche in den Verbindungsstellen Werkstoffe mit hoher Wärmeleitfähigkeit verwenden. Dies gilt insbesondere für das Verlöten des Absorberbleches mit dem unteren Blech, da ein Lot, welches im Allgemeinen eine metallische Legierung ist, eine hohe Wärmeleitfähigkeit aufweist.

Sind die Prägungen des Absorberbleches und des unteren Bleches zumindest teilweise von deren Kontaktfläche wegweisend ausgeführt, können die Prägungen des Absorberbleches sowie des unteren Bleches in ihrer Tiefe verringert werden, da die Kanäle in diesem Fall beispielsweise durch jeweils gegenüberliegende Prägungen im Absorberblech und im unteren Blech gebildet werden. Hierdurch kann die Herstellung des geprägten Absorberbleches bzw. des unteren Bleches vereinfacht werden und gleichzeitig eine vergrößerte Absorptionsfläche des Absorberbleches zur Verfügung gestellt werden.

Weist das Absorberblech zusätzlich Prägungen zur Vergrößerung der Absorptionsfläche auf, kann die maximale durch das Absorberblech absorbierte Strahlungsenergie vergrößert werden und damit der Wirkungsgrad des Sonnenkollektors verbessert werden.

Vorzugsweise verlaufen die Wärmeleitmedium führenden Kanäle zumindest teilweise mäanderförmig und/oder zumindest teilweise parallel zueinander. Beim teilweisen, mäanderförmigen Verlauf der Kanäle führt beispielsweise nur ein Kanal das Wärmeleitmedium mäanderförmig über einen Teil der Fläche des Absorberelementes. Dies wird zumeist durch sogenannte Serpentinenregister realisiert. Damit wird erreicht, dass das Wärmeleitmedium beim Durchfluss durch die Kanäle des Sonnenkollektors möglichst lange mit dem Absorberblech bzw. mit dem unteren Blech in Kontakt bleibt. Das Wärmeleitmedium kann dann aufgrund der langen Verweildauer im Absorberelement auf eine relativ hohe Temperatur erwärmt werden. Im Gegensatz sind bei teilweise parallel verlaufenden Kanälen diese beispielsweise über zwei Sammelkanäle miteinander verbunden, so dass der Durchfluss des Wärmeleitmediums in mehreren Kanälen parallel erfolgt. Diese Bereiche des Absorberelementes werden in sogenannten Parallelregistern realisiert. Aufgrund des geringeren Durchflusswiderstandes bei parallelem Durchfluss kann eine höhere Menge an Wärmeleitmedium durch das Absorberelement geführt werden kann, so dass prinzipiell eine höhere Wärmemenge vom Absorberblech abtransportiert werden kann. Darüber hinaus ist es aufgrund des geringeren Druckverlustes in Parallelregistern möglich, Pumpen mit einer geringeren Leistung und damit kostengünstigere Pumpen zu verwenden. Insbesondere durch die erfindungsgemäße Ausführung des Absorberblechs und des unteren Blechs sind jedoch beliebige andere Verlaufsformen der Kanäle für das Wärmeleitmedium des Sonnenkollektors möglich, welche die Wärmeübertragung vom Absorberblech auf das Wärmeleitmedium optimieren. Beispielsweise können auch sehr viel komplexere Verläufe der Kanäle, beispielsweise eine Kombination von Serpentinen- und Paralleldurchfluss, für das Wärmeleitmedium realisiert werden. Daneben sind auch Strömungswiderstände zur Erzeugung turbulenter Strömungen denkbar, um eine Erhöhung der Konvektionswärmeübergangs vom Absorberblech bzw. unteren Blech auf das Wärmeleitmedium zu erzielen.

Eine bandweise Verarbeitung des vorgesehenen Absorberbleches und des unteren Bleches kann dadurch ermöglicht werden, dass tiefgezogene Prägungen im Absorberblech und/oder unteren Blech vorgesehen sind. Tiefziehen ist eines der gängigen Umformverfahren im Bereich der Herstellung von anwendungsspezifischen Blechen, welches eine bandweise Verarbeitung der Bleche ermöglicht, in dem nach dem Abwickeln eines Bandes von einem Coil die Bleche geprägt und anschließend vereinzelt werden. Es ist jedoch auch vorstellbar, die Bleche vom Band ausgehend zuzuschneiden und anschließend zu prägen. Beide Verfahren weisen ein hohes Automatisierungspotential auf und ermöglichen damit eine sehr wirtschaftliche Herstellung entsprechender Bleche.

Vorzugsweise weist jedes Absorberelement Anschlussstücke, insbesondere Fittings, zum Anschließen eines Zu- und Ablaufs für das Wärmeleitmedium oder für weitere Sonnenkollektoren auf, so dass die Sonnenkollektoren problemlos an das Wärmeleitmedium oder an weitere Sonnenkollektoren angeschlossen werden können.

Gemäß einer nächsten weitergebildeten Ausführungsform des erfindungsgemäßen Sonnenkollektors, wird dieser dadurch vorteilhaft ausgestaltet, dass der Sonnenkollektor modular aufgebaut ist. Mit "modular" sind vorliegend einerseits die Abmessungen des Sonnenkollektors und die Anordnung der Anschlusselemente gemeint, welche so ausgestaltet sind, dass eine Vielzahl von Sonnenkollektoren zu einer nahezu beliebig großen Sonnenkollektoreinheit zusammengeschlossen werden können. Andererseits bezieht sich der modulare Aufbau der Sonnenkollektoren auf die Verwendung des Absorberelementes, welches ohne Montage der einzelnen Kanäle für das Wärmeleitmedium verwendbar ist.

Gemäß einer zweiten Lehre der vorliegenden Erfindung wird die oben aufgezeigte Aufgabe durch ein Verfahren zur Herstellung eines Sonnenkollektors mit einem Absorberelement, wobei das Absorberelement mindestens ein Absorberblech zur Absorption des Sonnenlichtes aufweist, dadurch gelöst, dass das Verfahren die folgenden Schritte umfasst:
- ein unterhalb des Absorberbleches angeordnetes Blech wird bereitgestellt,
- das untere Blech und/oder das obere Absorberblech wird mit Prägungen, insbesondere mit zumindest teilweise mäanderförmig verlaufenden Prägungen, versehen, welche zumindest teilweise die Kanäle für das Wärmeleitmedium bilden und
- das Absorberblech und das untere Blech werden abdichtend miteinander verbunden,
- das untere Blech und/oder das obere Absorberblech wird mit Prägungen, insbesondere mit zumindest teilweise mäanderförmig verlaufenden Prägungen, versehen, welche zumindest teilweise die Kanäle für das Wärmeleitmedium bilden,
- das Absorberblech und das untere Blech werden abdichtend miteinander verlötet werden, wobei ein lotplattiertes unteres Blech und/oder ein lotplattiertes Absorberblech verwendet wird und
- das Absorberblech wird vor dem Verbinden mit dem unteren Blech mit einer selektiv absorbierenden, hochtemperaturfesten Beschichtung beschichtet.

Wie bereits oben ausgeführt, wird durch das erfindungsgemäße Verfahren die Montage des Absorberelementes wesentlich vereinfacht, so dass erfindungsgemäße Sonnenkollektoren wesentlich kostengünstiger hergestellt werden können. Weiter vereinfacht wird das erfindungsgemäße Verfahren zur Herstellung von Sonnenkollektoren dadurch, dass das Absorberblech vor dem Verbinden mit dem unteren Blech mit einer selektiv absorbierenden, hochtemperaturfesten Beschichtung beschichtet wird. Wie bereits zuvor ausgeführt, erhöht eine derartige Beschichtung einerseits den Wirkungsgrad des Sonnenkollektors erheblich. Andererseits kann durch das Aufbringen vor dem Verbinden der Bleche die Beschichtung bandweise und damit besonders wirtschaftlich erfolgen. Die hochtemperaturfeste, selektiv absorbierende Beschichtung kann auch Lötprozesse ohne Schäden überstehen, so dass auch wirtschaftliche Verfahren zur Verbindung der Bleche miteinander wie das Löten eingesetzt werden können.

Das Absorberblech wird mit dem unteren Blech verlötet. Die stoffschlüssige Verbindung gewährleistet nicht nur den, wie erwähnt, maximalen Wärmeübertrag vom Absorberblech zum unteren Blech, sondern auch die notwendige Dichtheit der durch das Absorberblech und das untere Blech gebildeten Kanäle für das Wärmeleitmedium. Beim Löten wird in der Regel eine sehr gute Wärmebrücke zwischen Absorberblech und unterem Blech ermöglicht, so dass die Effizienz des Sonnenkollektors gesteigert werden kann.

Erfindungsgemäß wird beim Löten ein lotplattiertes unteres Blech und/oder Absorberblech verwendet, so dass die Anwendung von besonders wirtschaftlichen Lötverfahren, beispielsweise einem Lötverfahren in einem Durchlaufofen bzw. in einem Batch-Ofen ermöglicht wird. Selbstverständlich können verschiedenste Lötverfahren verwendet werden, beispielsweise das Salzbad-Löten, das Vakuumlöten oder CAB-Löten. Ferner können korrosive oder nicht korrosive Flussmittel verwendet werden.

Gemäß einer alternativen Ausgestaltung des erfindungsgemäßen Verfahrens kann alternativ beim Löten eine zwischen dem Absorberblech und dem unteren Blech angeordnete Lötfolie verwendet werden. Die Lötfolie dient, äquivalent zu einer Plattierschicht aus Aluminiumlot, der Bereitstellung eines metallischen Lotes an den Verbindungsstellen des Absorberbleches und des unteren Bleches. Das Verfahren selbst entspricht dem bei der Verwendung von lotplattierten Blechen mit der Ausnahme, dass zwischen den in dem Fall nicht lotplattierten Blechen die Lötfolie angeordnet werden muss.

Das erfindungsgemäße Verfahren kann weiter dadurch verbessert werden, dass die Prägungen des Absorberbleches und/oder des unteren Bleches durch Tiefziehen in ein Band oder in vorher zugeschnittene Bleche eingebracht werden. Bei der bandweisen Prägung werden die geprägten Blech nachträglich vereinzelt, so dass bereits bestehende Anlagen zur Herstellung des geprägten Absorberbleches bzw. des unteren Bleches verwendet werden können. Dies trifft auch zu, wenn die Bleche vor dem Tiefziehen zugeschnitten werden.

Bestehen das Absorberblech und/oder das untere Blech zumindest teilweise aus Aluminium und/oder einer Aluminiumlegierung, können die Bleche des Absorberelementes aus einem kostengünstigen Werkstoff mit hervorragenden Umformeigenschaften zur Verfügung gestellt werden.

Werden beim Löten des Absorberbleches und des unteren Bleches gleichzeitig Anschlussstücke zum Anschließen eines Zu- und Ablaufs des Wärmeleitmediums, insbesondere zum Anschließen von weiteren Sonnenkollektoren, angelötet, kann das Absorberelement mit einer minimalen Anzahl von Arbeitsschritten so zur Verfügung gestellt werden, dass es unmittelbar für den Einbau in den Sonnenkollektor und unmittelbar für den Anschluss weiterer Sonnenkollektoren bzw. des Zu- und Ablaufs des Wärmeleitmedium vorbereitet ist.

Es gibt nun eine Vielzahl von Möglichkeiten den erfindungsgemäßen Sonnenkollektor sowie das erfindungsgemäße Verfahren weiterzubilden und auszugestalten. Hierzu wird einerseits verwiesen auf die den unabhängigen Patentansprüchen 1 und 8 nachgeordneten Patentansprüchen sowie auf die Beschreibung von vier Ausführungsbeispielen in Verbindung mit der Zeichnung. In der Zeichnung zeigt
- Fig. 1: in einer schematischen Schnittansicht das Absorberelement eines ersten Ausführungsbeispiels eines erfindungsgemäßen Sonnenkollektors hergestellt nach dem erfindungsgemäßen Verfahren,
- Fig. 2: ein Absorberelement eines zweiten Ausführungsbeispiels eines erfindungsgemäßen Sonnenkollektors in einer perspektivischen Ansicht,
- Fig. 3: in einer schematischen Schnittansicht das Absorberelement eines dritten Ausführungsbeispiels eines erfindungsgemäßen Sonnenkollektors und
- Fig. 4: ein Absorberelement eines vierten Ausführungsbeispiels eines erfindungsgemäßen Sonnenkollektors.

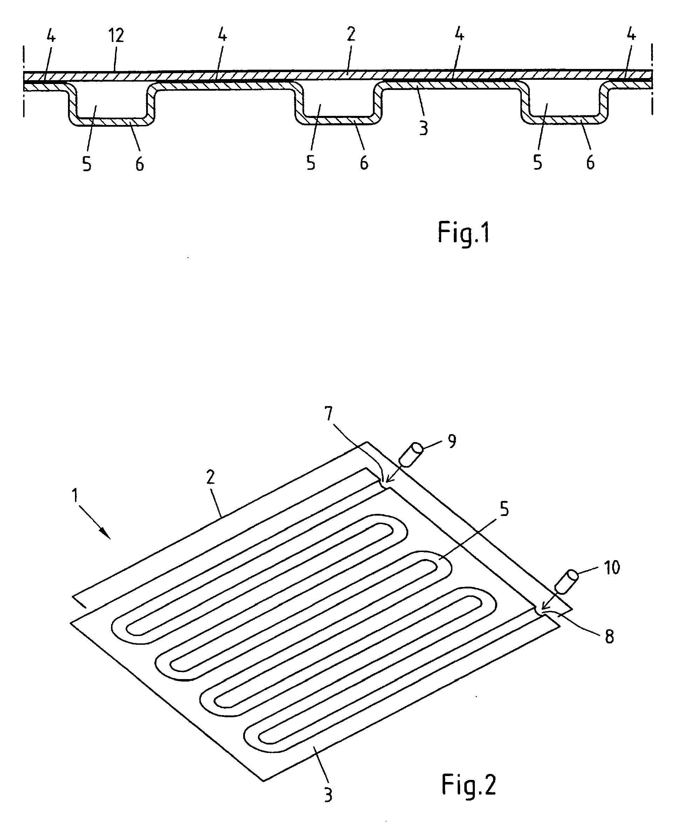

In Fig. 1 ist in einer Schnittansicht das Absorberelement 1 eines ersten Ausführungsbeispiels eines erfindungsgemäßen Sonnenkollektors dargestellt. Das Absorberelement 1 besteht aus einem Absorberblech 2 und einem unteren Blech 3, welche über Verbindungsstellen 4 stoffschlüssig, beispielsweise durch eine Lötnaht, verbunden sind. Die Verbindungsstellen 4 zwischen dem Absorberblech 2 und dem unteren Blech 3 werden vorzugsweise durch ein metallisches Lot gebildet, so dass die Verbindungsstellen 4 zur Wärmeübertragung an das untere Blech 3 und damit an das Wärmeleitmedium beitragen. Das untere Blech 3 des ersten Ausführungsbeispiels weist Prägungen 6 auf, durch welche die Kanäle 5 für das Wärmeleitmedium zumindest teilweise gebildet werden. Das Absorberblech 2 ist zudem zusätzlich, wie bereits ausgeführt, mit einer Beschichtung 12 versehen, welche eine hohe Absorption der eingestrahlten Sonnenstrahlung ermöglicht und gleichzeitig eine Rückstrahlung der aufgenommenen Strahlungsenergie verringert.

Vorzugsweise wird eine anorganische, selektiv absorbierende Beschichtung 12 verwendet, welche eine Temperaturbeständigkeit von 400 bis 600 °C hat. Diese kann beispielsweise besonders wirtschaftlich vor einem Lötprozess bandweise auf das Absorberblech aufgebracht werden, so dass die fertig gelöteten Sonnenkollektoren nicht mehr aufwändig mit einer selektiv absorbierenden Beschichtung beschichtet werden müssen. Die Schichtdicken der Beschichtung sind vorzugsweise kleiner als 2 µm.

Das in Fig. 1 dargestellte Absorberelement 1 wird in der Regel in modularer Weise hergestellt, wobei nach Möglichkeit standardisierte Absorberelemente 1 mit standardisierten Abmessungen hergestellt werden. Aufgrund des rationalen Herstellverfahrens, welches auf das Verlöten von einzelnen, beispielsweise aus Kupfer bestehenden Rohren verzichtet, können Sonnenkollektoren so besonders wirtschaftlich hergestellt werden. Es versteht sich dabei von selbst, dass das Absorberelement 1 des Sonnenkollektors zusätzlich noch isoliert werden muss, um einen Wärmeabfluss ausschließlich über das Wärmeleitmedium zu gewährleisten. Hierzu sind die aus dem Stand der Technik bekannten Maßnahmen zu treffen.

In Fig. 2 ist nun das Absorberelement 1 eines zweiten Ausführungsbeispiels eines erfindungsgemäßen Sonnenkollektors perspektivisch dargestellt, bei welchem die Kanäle 5 in einem Serpentinenregister verlaufen. Man erkennt den mäanderförmigen Verlauf der Kanäle 5 für das Wärmeleitmedium, welche in zwei Anschlussbereiche 7, 8 münden. Vorzugsweise werden gemäß des in Fig. 2 dargestellten zweiten Ausführungsbeispiels die Anschlussstücke 9 und 10 gleichzeitig mit dem Verlöten des Absorberbleches 2 und des unteren Bleches 3 ebenso angelötet. Dies vereinfacht den Herstellprozess weiter. Zwar sind in Fig. 2 die Kanäle 5 für das Wärmeleitmedium in einem Serpentinenregister dargestellt, es ist jedoch vorstellbar einen beliebigen Verlauf, wie beispielsweise in Parallelregistern, durch geeignete Prägung des Absorberbleches 2 und/oder unteren Bleches 3 zu ermöglichen. Die geprägten Kanäle 5 für das Wärmeleitmedium werden dabei vorzugsweise durch Verwendung eines Tiefziehverfahrens in das untere Blech und/oder das Absorberblech eingebracht.

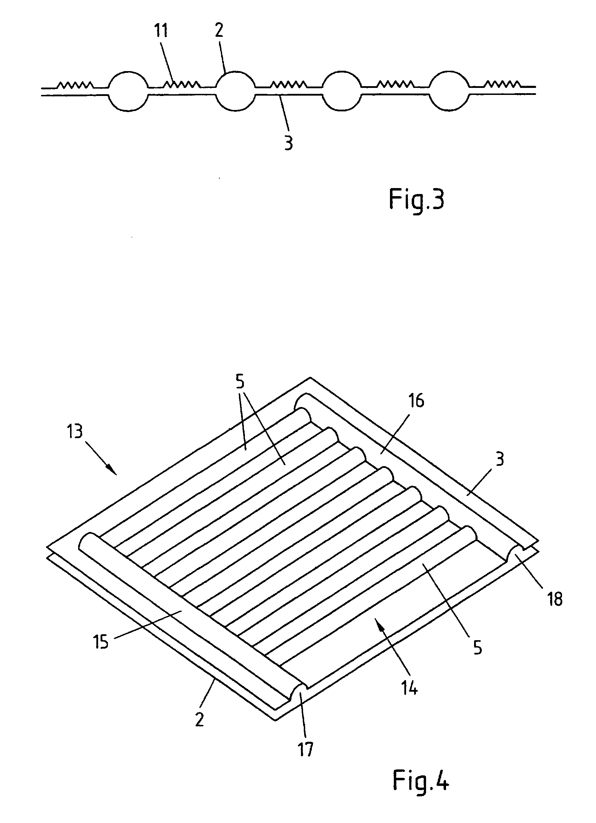

Ferner zeigt Fig. 3 in einer Schnittansicht das Absorberelement 1 eines dritten Ausführungsbeispiels des erfindungsgemäßen Sonnenkollektors, bei welchem sowohl in das Absorberblech 2 als auch in das untere Blech 3 Prägungen zur Bildung der Kanäle 5 für das Wärmeleitmedium eingebracht worden sind. Werden in beide Bleche die Prägungen zur Bildung der Kanäle 5 für das Wärmeleitmedium eingebracht, können diese relativ flach ausfallen, sofern die Prägungen von der Kontaktfläche der Bleche wegweisend, wie in dem dritten Ausführungsbeispiel dargestellt, eingebracht werden. Zusätzlich weist das Absorberblech weitere Prägungen 11 auf, welche zur Vergrößerung der Absorptionsfläche dienen und zu einem verbesserten Wirkungsgrad des Sonnenkollektors beitragen. Die in Fig. 3 dargestellten zylinderförmigen Kanäle 5 für das Wärmeleitmedium müssen nicht notwendigerweise zylinderförmig sein. Vielmehr kann mit dem erfindungsgemäßen Verfahren zur Herstellung von Sonnenkollektoren eine Vielzahl an Kanalquerschnitten für die Kanäle 5 des Wärmeleitmediums realisiert werden, so dass diese optimal an die Wärmeübertragung vom Absorberblech auf das Wärmeleitmedium angepasst werden können.

In einer schematischen perspektivischen Ansicht ist schließlich in Fig. 4 ein Absorberelement 13 eines vierten Ausführungsbeispiels eines erfindungsgemäßen Sonnenkollektors dargestellt. Die Kanäle 5 für das Wärmeleitmedium verlaufen im unteren Blech 3 des Absorberelements 13 in einem Parallelregister 14 zwischen zwei Sammelkanälen 15, 16, die jeweils in einer Einlassöffnung 17 und in einer Auslassöffnung 18 münden. Durch die teilweise parallel verlaufenden Wärmeleitmedium führenden Kanäle 5 wird ein größerer effektiver Leitungsquerschnitt für das Wärmeleitmedium realisiert, so dass der Leitungswiderstand pro Absorberelement 13 sinkt. Damit wird es möglich, die Durchflussmengen des Wärmeleitmediums deutlich zu erhöhen und den Abtransport einer größeren Wärmemenge zu ermöglichen. Gleichzeitig können auch in den Kanälen 5, 15 und 16 Maßnahmen getroffen werden, um den Wärmeübergang vom Absorberblech und vom unteren Blech auf das Wärmeleitmedium zu erhöhen. Beispielsweise können gezielt Strömungswiderstände durch zusätzliche Prägungen eingebracht werden, welche durch Erzeugung von Wirbeln die Konvektion des Wärmemediums an den Kanalwänden erhöhen.

## Patentansprüche

1. Sonnenkollektor zur Erwärmung eines Wärmeleitmediums umfassend mindestens ein Absorberelement (1) mit mindestens einem Absorberblech (2) zur Absorption des Sonnenlichtes und Kanälen (5) für das Wärmeleitmedium, welche mit dem Absorberblech derart verbunden sind, so dass Wärme von dem Absorberblech (2) an das Wärmeleitmedium übertragen werden kann, wobei das Absorberblech (2) eine selektiv absorbierende Beschichtung (22) aufweist, wobei ein unterhalb des Absorberbleches (2) angeordnetes Blech (3) vorgesehen ist, welches mit dem Absorberblech (2) abdichtend verbunden ist, wobei das Absorberblech und/oder das untere Blech zumindest teilweise aus Aluminium und/oder einer Aluminiumlegierung bestehen, das untere Blech (3) und/oder das Absorberblech (2) Prägungen (6) aufweist, welche nach dem Verbinden des Bleches (3) mit dem Absorberblech (2) zumindest teilweise Kanäle (5) für das Wärmeleitmedium bilden, und wobei die selektiv absorbierende Beschichtung des Absorberblechs (2) hochtemperaturfest ist,
**dadurch gekennzeichnet, dass**
das Absorberblech (2) und/oder das untere Blech (3) zumindest auf der mit dem Wärmeleitmedium in Kontakt stehenden Fläche eine Lotplattierung aufweist und das Absorberblech (2) mit dem unteren Blech (3) verlötet ist.

2. Sonnenkollektor nach Anspruch 1,
**dadurch gekennzeichnet, dass**
die Prägungen (6) des Absorberbleches (2) und des unteren Bleches (3) zumindest teilweise von deren Kontaktfläche wegweisend ausgeführt sind.

3. Sonnenkollektor nach einem der Ansprüche 1 oder 2,
**dadurch gekennzeichnet, dass**
das Absorberblech (2) zusätzlich Prägungen (11) zur Vergrößerung der Absorptionsfläche aufweist.

4. Sonnenkollektor nach einem der Ansprüche 1 bis 3,
**dadurch gekennzeichnet, dass**
die Wärmeleitmedium führenden Kanäle (5)zumindest teilweise mäanderförmig und/oder zumindest teilweise parallel zueinander verlaufen.

5. Sonnenkollektor nach einem der Ansprüche 1 bis 4,
**dadurch gekennzeichnet, dass** die Prägungen (6, 11) als
tiefgezogene Prägungen (6,11) im Absorberblech (2) und/oder unteren Blech (3) vorgesehen sind.

6. Sonnenkollektor nach einem der Ansprüche 1 bis 5,
**dadurch gekennzeichnet, dass**
das Absorberelement Anschlusstücke (9, 10), insbesondere Fittings, zum Anschließen eines Zu- und Ablaufs für das Wärmeleitmedium oder für weitere Sonnenkollektoren aufweist.

7. Sonnenkollektor nach einem der Ansprüche 1 bis 6,
**dadurch gekennzeichnet, dass**
der Sonnenkollektor modular aufgebaut ist.

8. Verfahren zur Herstellung eines Sonnenkollektors mit einem Absorberelement, insbesondere eines Sonnenkollektors nach einem der Ansprüche 1 bis 7, wobei das Absorberelement mindestens ein Absorberblech zur Absorption des Sonnenlichtes aufweist und das Absorberblech und/oder das untere Blech zumindest teilweise aus Aluminium und/oder einer Aluminiumlegierung bestehen,
**dadurch gekennzeichnet, dass**
das Verfahren die folgenden Schritte umfasst:
- ein unterhalb des Absorberbleches angeordnetes Blech wird bereitgestellt,
- das untere Blech und/oder das obere Absorberblech wird mit Prägungen, insbesondere mit zumindest teilweise mäanderförmig verlaufenden Prägungen, versehen, welche zumindest teilweise die Kanäle für das Wärmeleitmedium bilden,
- das Absorberblech und das untere Blech werden abdichtend miteinander verlötet werden, wobei ein lotplattiertes unteres Blech und/oder ein lotplattiertes Absorberblech verwendet wird und
- das Absorberblech wird vor dem Verbinden mit dem unteren Blech mit einer selektiv absorbierenden, hochtemperaturfesten Beschichtung beschichtet.

9. Verfahren nach Anspruch 8,
**dadurch gekennzeichnet, dass**
die Prägungen des Absorberbleches und/oder des unteren Bleches durch Tiefziehen in ein Band oder vorher zugeschnittenes Blech eingebracht werden.

10. Verfahren nach einem der Ansprüche 8 oder 9,
**dadurch gekennzeichnet, dass**
während des Lötens des Absorberbleches und des unteren Bleches gleichzeitig Anschlussstücke zum Anschluss eines Zu- und Ablaufs des Wärmeleitmediums oder von weiteren Sonnenkollektoren angelötet werden.

## Claims

1. A solar collector for the heating of a heat conduction medium comprising at least one absorber element (1) with at least one absorber sheet (2) for purposes of absorbing sunlight, and channels (5) for the heat conduction medium, which are connected with the absorber sheet such that heat can be transferred from the absorber sheet (2) to the heat conduction medium, wherein the absorber sheet (2) has a selectively absorbing coating (22), wherein a sheet (3) arranged underneath the absorber sheet (2) is provided, which is connected with the absorber sheet (2) in a sealing manner, wherein the absorber sheet and/or the lower sheet at least in part consist of aluminium and/or an aluminium alloy, the lower sheet (3) and/or the absorber sheet (2) has impressed areas (6), which after the connection of the sheet (3) with the absorber sheet (2) at least in part form channels (5) for the heat conduction medium, and wherein the selectively absorbing coating of the absorber sheet (2) is high temperature resistant,
**characterised in that**,
the absorber sheet (2) and/or the lower sheet (3) has a braze plating, at least on the surface in contact with the heat conduction medium, and the absorber sheet (2) is brazed to the lower sheet (3).

2. The solar collector in accordance with claim 1, **characterised in that**, the impressed areas (6) of the absorber sheet (2) and the lower sheet (3) at least in part are embodied such that they point outwards from their contact surfaces.

3. The solar collector in accordance with one of the claims 1 or 2, **characterised in that**, the absorber sheet (2) has additional impressed areas (11) for purposes of increasing the absorption surface area.

4. The solar collector in accordance with one of the claims 1 to 3, **characterised in that**, the channels (5) guiding the heat conduction medium run at least in part in a meandering shape, and/or at least in part parallel to one another.

5. The solar collector in accordance with one of the claims 1 to 4, **characterised in that**, the impressed areas (6, 11) are provided as deep drawn impressed areas (6, 11) in the absorber sheet (2) and/or lower sheet (3).

6. The solar collector in accordance with one of the claims 1 to 5, **characterised in that**, the absorber element has connecting pieces (9, 10), in particular fittings, for purposes of connecting a feed and a discharge for the heat conduction medium, or further solar collectors.

7. The solar collector in accordance with one of the claims 1 to 6, **characterised in that**, the solar collector is constructed in a modular manner.

8. A method for the manufacture of a solar collector with an absorber element, in particular a solar collector in accordance with one of the claims 1 to 7, wherein the absorber element has at least one absorber sheet for purposes of absorbing sunlight, and the absorber sheet and/or the lower sheet at least in part consist of aluminium and/or an aluminium alloy,
**characterised in that**,
the method comprises the following steps:
- a sheet arranged underneath the absorber sheet is provided,
- the lower sheet and/or the upper absorber sheet is provided with impressed areas, in particular with impressed areas at least in part running in a meandering shape, which at least in part form the channels for the thermally conducting medium,
- the absorber sheet and the lower sheet are brazed together in a sealing manner, wherein a braze-plated lower sheet and/or a braze-plated absorber sheet is used, and
- before connection with the lower sheet the absorber sheet is coated with a selectively absorbing high temperature resistant coating.

9. The method in accordance with claim 8, **characterised in that**, the impressed areas of the absorber sheet and/or the lower sheet are introduced by deep drawing in a strip, or in a sheet previously cut to length.

10. The method in accordance with one of the claims 8 or 9, **characterised in that**, during the process of brazing the absorber sheet and the lower sheet, connecting pieces are brazed on at the same time for purposes of connecting a feed and a discharge for the heat conduction medium, or further solar collectors.

## Revendications

1. Collecteur solaire pour réchauffer un agent caloporteur comprenant au moins un élément absorbeur (1) avec au moins une tôle d'absorption (2) pour l'absorption de la lumière solaire et avec des canaux (5) pour l'agent caloporteur lesquels sont reliés à la tôle d'absorption de manière à ce que de la chaleur puisse être transférée de la tôle d'absorption (2) à l'agent caloporteur, la tôle d'absorption (2) présentant une couche de revêtement (22) à absorption sélective, une tôle (3) disposée en-dessous de la tôle d'absorption (2) étant prévue, laquelle est reliée de manière étanche à la tôle d'absorption (2), la tôle d'absorption et/ou la tôle inférieure se composant au moins en partie d'aluminium et/ou d'un alliage à base d'aluminium, la tôle inférieure (3) et/ou la tôle d'absorption (2) présentant des estampages (6) lesquels, après le raccordement de la tôle (3) à la tôle d'absorption (2), forment au moins partiellement des canaux (5) pour l'agent caloporteur, et la couche de revêtement à absorption sélective de la tôle d'absorption (2) résistant à des températures élevées,
**caractérisé en ce que** la tôle d'absorption (2) et/ou la tôle inférieure (3) présente un placage de soudure au moins sur la surface en contact avec l'agent caloporteur et **en ce que** la tôle d'absorption (2) est soudée avec la tôle inférieure (3).

2. Collecteur solaire selon la revendication 1, **caractérisé en ce que** les estampages (6) de la tôle d'absorption (2) et de la tôle inférieure (3) sont réalisés de manière au moins partiellement orientés de façon à tourner le dos à leur surface de contact.

3. Collecteur solaire selon l'une des revendications 1 ou 2, **caractérisé en ce que** la tôle d'absorption (2) présente des estampages supplémentaires (11) pour l'agrandissement de la surface d'absorption.

4. Collecteur solaire selon l'une des revendications 1 à 3, **caractérisé en ce que** les canaux (5) charriant l'agent caloporteur s'étendent au moins partiellement en forme de méandres et/ou au moins partiellement parallèlement les uns aux autres.

5. Collecteur solaire selon l'une des revendications 1 à 4, **caractérisé en ce que** les estampages sont prévus en tant qu'estampages emboutis (6, 11) dans la tôle d'absorption (2) et/ou la tôle inférieure (3).

6. Collecteur solaire selon l'une des revendications 1 à 5, **caractérisé en ce que** l'élément d'absorption présente des pièces de raccordement (9, 10), en particulier des fittings, pour raccorder une arrivée et un écoulement pour l'agent caloporteur ou pour d'autres collecteurs solaires.

7. Collecteur solaire selon l'une des revendications 1 à 6, **caractérisé en ce que** le collecteur solaire est configuré de manière modulaire.

8. Procédé pour la fabrication d'un collecteur solaire avec un élément absorbeur, en particulier d'un collecteur solaire selon l'une des revendications 1 à 7, l'élément absorbeur présentant au moins une tôle d'absorption pour l'absorption de la lumière solaire et la tôle d'absorption et/ou la tôle inférieure se composant au moins partiellement d'aluminium ou d'un alliage à base d'aluminium, **caractérisé en ce que** le procédé comprend les étapes suivantes :
- mise à disposition d'une tôle disposée en-dessous de la tôle d'absorption,
- la tôle inférieure et/ou la tôle d'absorption supérieure est garnie d'estampages, en particulier d'estampage s'étendant au moins partiellement en forme de méandres, lesquels forment au moins partiellement les canaux pour l'agent caloporteur,
- la tôle d'absorption et la tôle inférieure sont soudées ensemble de manière étanche, une tôle inférieure à placage de soudure et/ou une tôle d'absorption à placage de soudure étant utilisée et
- avant la liaison avec la tôle inférieure, la tôle d'absorption est revêtue d'une couche de revêtement à absorption sélective résistant à une température élevée.

9. Procédé selon la revendication 8, **caractérisé en ce que** les estampages de la tôle d'absorption et/ou de la tôle inférieure sont aménagés par emboutissage dans une bande ou une tôle préalablement découpée.

10. Procédé selon l'une des revendications 8 ou 9, **caractérisé en ce que** pendant le soudage de la tôle d'absorption et de la tôle inférieure, sont soudeés simultanément des pièces de raccordement pour le raccordement d'une arrivée et d'un écoulement de l'agent caloporteur ou d'autres collecteurs solaires.
